# EUROPÄISCHE PATENTSCHRIFT

(11) **EP 0 519 932 B1**
(45) Veröffentlichungstag und Bekanntmachung des Hinweises auf die Patenterteilung: **11.10.1995**
(21) Anmeldenummer: 91903997.4
(22) Anmeldetag: 28.02.1991
(51) Int. Cl.: F02P 5/15

(54) **VERFAHREN ZUR ADAPTIVEN KLOPFREGELUNG EINER BRENNKRAFTMASCHINE**
PROCESS FOR ADAPTIVE KNOCK CONTROL IN AN INTERNAL COMBUSTION ENGINE
PROCEDE DE REGLAGE ADAPTATIVE DU CLIQUETAGE DANS UN MOTEUR A COMBUSTION INTERNE

(30) Priorität: 15.03.1990 DE 4008170
(43) Veröffentlichungstag der Anmeldung: 30.12.1992
(73) Patentinhaber: ROBERT BOSCH GMBH, 70442 Stuttgart (DE)
(72) Erfinder: ENTENMANN, Robert, D-7141 Benningen (DE); UNLAND, Stefan, D-7141 Schwieberdingen (DE); HAEMING, Werner, D-6956 Neudenau-Herbolzheim (DE)
(86) Internationale Anmeldenummer: DE9100170
(87) Internationale Veröffentlichungsnummer: WO9114097

(56) Entgegenhaltungen:
- EP-A- 0 084 368
- EP-A- 0 087 162
- EP-A- 0 101 342
- EP-A- 0 193 896
- EP-A- 0 326 193
- WO-A-84/04361
- DE-A- 3 009 046
- DE-A- 3 102 627
- FR-A- 2 511 435
- FR-A- 2 544 802
- US-A- 4 539 957
- US-A- 4 774 922
- Patent Abstracts of Japan, Band 8, Nr. 146 (M-307)(1583), 7. Juli 1984; & JP-A-5941666
- SAE Technical Paper Series 890459

## Beschreibung

### Stand der Technik

Die Erfindung betrifft ein Verfahren zur adaptiven Klopfregelung einer Brennkraftmaschine, wie es bereits aus SAE Technical Paper Series 890459 bekannt ist und folgende Schritte umfaßt:
- Spätverstellung des Zündwinkels beim Klopfen eines Zylinders,
- Rückführung des Zündwinkels durch Verstellung in Richtung "früh",
- Speichern von aktuellen Zündwinkel-Spätverstellungswerten in einem Adaptions-Kennfeld, das in Abhängigkeit von der Größe von Betriebsparamtern der Brennkraftmaschine unterteilte Bereiche aufweist, wobei stets ein Wert einer Zündwinkelspätverstellung, der während des Betriebs im zugehörigen Bereich ermittelt wurde, gespeichert wird (dies erfolgt insbesondere beim Verlassen dieses Bereichs),
- Einstellung des für einen bestimmten Bereich gespeicherten Werts der Zündwinkelspätverstellung beim Wechsel in diesen Bereich.

Beim Betrieb einer Brennkraftmaschine stellt das sogenannte "Klopfen" einen kritischen Betriebszustand dar, der die Lebensdauer ungünstig beeinflussen kann. Bekannt ist eine sogenannte Klopfregelung, die beim Sensieren des Klopfens eines Zylinders der Brennkraftmaschine den Zündwinkel in Richtung "spät" verschiebt. Hierdurch läßt sich der Klopfzustand beseitigen. Nach Ablauf einer bestimmten Zeit erfolgt eine Rückführung des Zündwinkels in Richtung "früh". Diese Rückführung wird vorzugsweise stufenförmig vorgenommen, das heißt, bei der Spätverstellung wird der Zündwinkel um eine relativ hohe Stufe verstellt, die bei der Rückführung in relativ kleineren, jeweils in Stufenbreite voneinander beabstandeten Stufensprüngen solange wieder abgebaut wird, bis es erneut zu einem Klopfzustand führt bzw. ein Vorgabewert des Zündwinkels erreicht ist, ohne daß ein Klopfzustand auftritt. Ferner ist ein Adaptions-Kennfeld vorgesehen, das in Abhängigkeit von der Größe von Betriebsparametern der Brennkraftmaschine unterteilte Bereiche aufweist. In jedem Bereich wird der Wert einer Zündwinkelspätverstellung, der während des Betriebs in diesem Bereich ermittelt wurde, beim Verlassen dieses Bereichs gespeichert (dies kann auch der Wert der Zündwinkelspätverstellung sein, der beim Verlassen des Bereichs gerade vorliegt). Wird der Bereich gewechselt, also ein neuer Bereich angefahren, so startet die Betriebsführung mit dem Wert der Zündwinkelspätverstellung, der beim Anfahren dieses Bereichs dort abgespeichert ist. Erweist sich dieser als für den vorliegenden Betriebszustand zu groß, das heißt, er ist zu weit in Richtung "spät" verstellt, so wird er nach dem erwähnten Klopfregelalgorithmus zurückgeführt.

### Vorteile der Erfindung

Das erfindungsgemäße Verfahren mit den im Hauptanspruch genannten Merkmalen hat demgegenüber den Vorteil, daß bei einem Wechsel der Bereiche des Adaptions-Kennfelds besonders schnell der für den vorliegenden Betriebszustand optimale Zündwinkel angenommen wird. Ausgehend von dem jeweils abgespeicherten Spätverstellungszündwinkel wird der Betriebszustand in sehr kurzer Zeit an die momentan aktuelle Klopfgrenze herangeführt. Ist dies erfolgt, so verläuft die Klopfregelung wie üblich, das heißt, tritt in dem neuen Bereich ein Klopfzustand auf, so wird zunächst wieder eine Zündwinkel-Spätverstellung und dann eine Rückführung des Zündwinkels in Richtung "früh" vorgenommen, die jedoch nicht mit vergrößerter Rückführungsgeschwindigkeit erfolgt. Das erfindungsgemäße Verfahren führt zu einem Leistungsgewinn gegenüber den bekannten Systemen, der sich besonders stark im Stadtverkehr bemerkbar macht.

Nach einer Weiterbildung der Erfindung ist vorgesehen, daß -wie bereits erwähnt- eine stufenförmige Zündwinkel-Spät- bzw. Frühverstellung erfolgt.

Insbesondere ist es möglich, zur Erzielung der vergrößerten Frühverstell-Geschwindigkeit die Stufenbreite der aufeinander folgenden Stufen bei der Rückführung des Zündwinkels in Richtung "früh" zu verkleinern. Zusätzlich oder alternativ ist es jedoch auch möglich, eine größere Frühverstellstufe gegenüber dem Betrieb zuzulassen, wenn eine Rückführung des Zündwinkels ohne Wechsel des Bereichs erfolgt.

Eine verkleinerte Stufenbreite ist insbesondere durch einen programmierbaren Faktor einstellbar. Damit läßt sich eine individuelle Anpassung an die jeweils verwendete Brennkraftmaschine erzielen.

Vorzugsweise wird die Klopfregelung von einem Steuergerät der Brennkraftmaschine vorgenommen. Es ist vorteilhaft, wenn bei der Einnahme eines neuen Bereichs in einer Steuergerät-Schaltung ein Steuerbit (Flag) gesetzt wird, das in seinem Setzzustand die vergrößerte Frühverstell-Geschwindigkeit auslöst. Tritt in dem neu angefahrenen Bereich ein Klopfen auf, so wird das Flag zurückgesetzt und der Betrieb mit normaler Stufenbreite weitergeführt.

Als Betriebsparameter werden bevorzugt die Last, insbesondere der Saugrohrdruck oder die Luftmasse oder die Drosselklappen-Winkelstellung, und die Drehzahl der Brennkraftmaschine herangezogen.

Insofern ist jedem Bereich des Adaptions-Kennfelds ein Last- und ein Drehzahlabschnitt zugeordnet. Die Last- und Drehzahlabschnitte können durch Last- und Drehzahlschwellen voneinander abgetrennt sein. Insbesondere ist das Adaptions-Kennfeld als kartesisches Koordinatensystem aufgebaut, das heißt, auf der Ordinate ist z. B. die Last und auf der Abszisse die Drehzahl der Brennkraftmaschine abgetragen. Mithin ergeben sich auf Ordinate und Abszisse die Last- und Drehzahlabschnitte. Wird eine Last- und/oder Drehzahlschwelle überschritten, so erfolgt ein Bereichswechsel im Kennfeld.

Wie bereits erwähnt, wird in jedem Bereich nach dem ersten Auftreten eines Klopfzustands die Zündwinkel-Frühverstellung durchgeführt, also die Verstellung aus der Spätposition heraus in Richtung "früh", mit normaler, das heißt, nicht vergrößerter Frühverstell-Geschwindigkeit vorgenommen.

Die Stufenbreite kann vorzugsweise durch ein Zählintervall eines Stufenbreitenzählers definiert werden. Zur Herbeiführung der vergrößerten Frühverstell-Geschwindigkeit läßt sich der Startwert und/oder der Endwert des Zählerstandes derart verändern, daß sich das Zählintervall verkürzt. Die Stufenhöhe bei der einstufigen Zündwinkel-Spätverstellung ist -wie bereits erwähnt- größer als bei der Zündwinkel-Rückverstellung. Mithin wird der Spätverstellbereich stufenförmig bis zum Auftreten eines erneuten Klopfens oder -sofern kein Klopfen auftritt- beim Erreichen eines Vorgabewerts des Zündwinkels wieder abgebaut. Damit erfolgt stets beim Erreichen des 2ählintenrall-Endwerts eine Zündwinkel-Frühverstellung um einen der Stufenhöhe entsprechende Inkrementbetrag.

### Zeichnung

Die Erfindung wird im folgenden anhand der Figuren näher erläutert. Es zeigen:
Figur 1 ein schematisches Blockschaltbild zur adaptiven Klopfregelung,
Figur 2 ein Adaptions-Kennfeld und
Figur 3 Diagramme des Zündwinkel-Verstellverlaufs und Signale eines Stufenbreitenzählers.

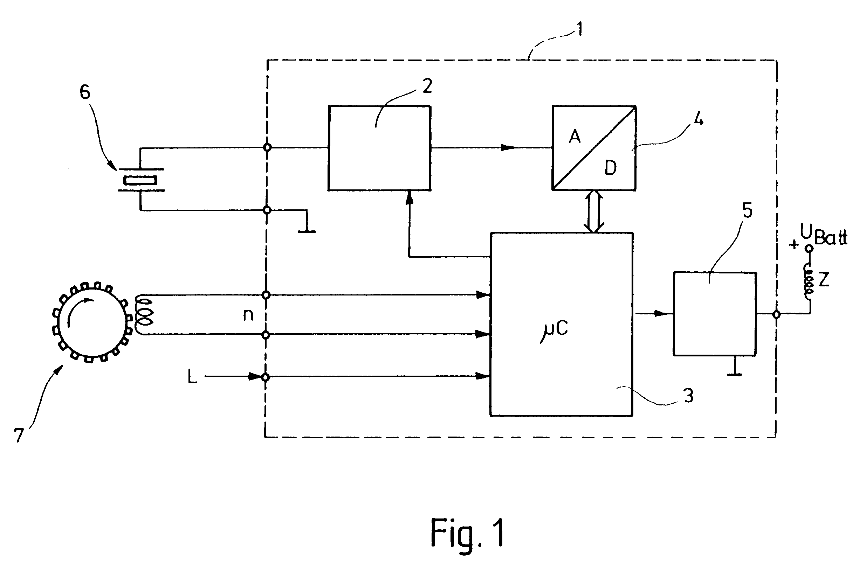

Die Figur 1 zeigt ein Blockschaltbild zur Durchführung eines Verfahrens einer adaptiven Klopfregelung einer Brennkraftmaschine. Die Brennkraftmaschine wird mit einem Steuergerät 1 betrieben, das eine Klopfsensor-Auswerteschaltung 2 einen Prozessor 3 (Mikrocontroller µC), einen Digital-Analog-Wandler 4 und eine Zündendstufe 5 aufweist.

Zur Erfassung von Klopfzuständen in den Zylindern der Brennkraftmaschine sind ein oder mehrere Klopfsensoren 6 vorhanden, die an die Klopfsensor-Auswerteschaltung 2 angeschlossen sind. Ferner ist die Brennkraftmaschine mit einem Drehzahlgeber 7 bestückt, der ein der Drehzahl n entsprechendes Signal dem Mikrocontroller µC zuleitet. Ferner wird dem Mikrocontroller µC ein weiterer Parameter der Brennkraftmaschine zugeleitet, der die Last L der Brennkraftmaschine kennzeichnet. Die Last L kann z. B. aus der Drosselklappenwinkelstellung oder dem Saugrohrdruck ermittelt werden.

Die Klopfsensor-Auswerteschaltung 2 ist über den Digital-Analog-Wandler 4 mit dem Prozessor 3 verbunden. Ein Ausgang des Prozessors 3 führt zu der Zündendstufe 5, die eine ihr zugeordnete Zündspule Z betreibt. Ein Anschluß der Zündspule Z ist mit dem Pluspol der Batteriespannung U_{BATT} eines die Brennkraftmaschine aufweisenden Fahrzeugs verbunden.

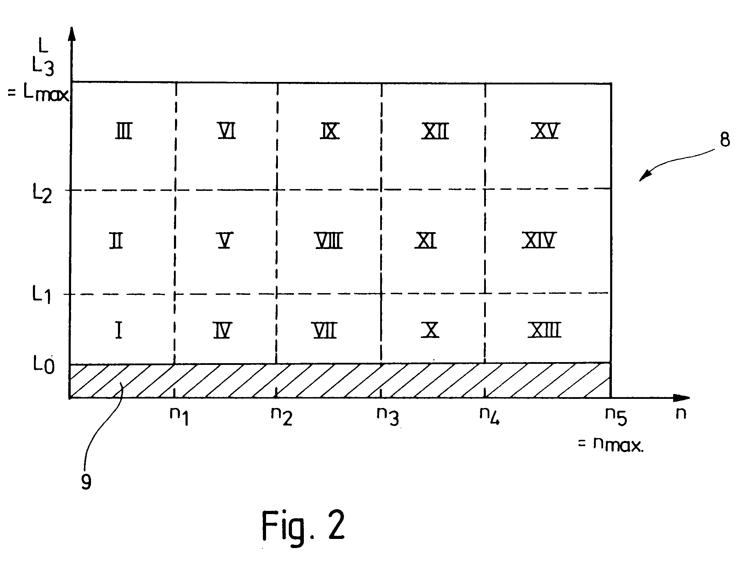

Zur Durchführung einer adaptiven Klopfregelung weist der Mikrocontroller µC ein Adaptions-Kennfeld 8 auf. Dies ist in der Figur 2 wiedergegeben. Das Adaptions-Kennfeld 8 ist in Bereiche, z. B. I bis XV unterteilt. Die Anzahl der Bereiche kann -je nach Ausführungsform- vorgegeben, insbesondere programmiert, werden. Auf der Ordinate des Diagramms der Figur 2 ist die Last L und auf der Abszisse die Drehzahl n abgetragen. Durch Lastschwellen L₀, L₁, L₂ und L₃ sind auf der Ordinate Lastabschnitte und durch Drehzahlschwellen n₁, n₂, n₃, n₄ und n₅ Drehzahlabschnitte auf der Abszisse gebildet. Jeder Lastabschnitt definiert mit einem zugehörigen Drehzahlabschnitt einen bestimmten der Bereiche I bis XV. Die Lastschwelle L₀ entspricht einer Minimal-Last; die Lastschwelle L₃ stellt eine Maximal-Last der Brennkraftmaschine dar. Ähnliches gilt für die Drehzahl: die Drehzahlschwelle L₁ ist eine Minimal-Drehzahl während die Drehzahlschwelle L₅ die Maximal-Drehzahl der Brennkraftmaschine kennzeichnet. Für Lasten kleiner als die Minimal-Last L₀ ist ein Bereich 9 vorgesehen, in dem die Klopfregelung nicht aktiv ist. Die Lastschwellen L₀ bis L₃ können so ausgelegt sein, daß sie als Kennlinie über der Drehzahl vorliegen.

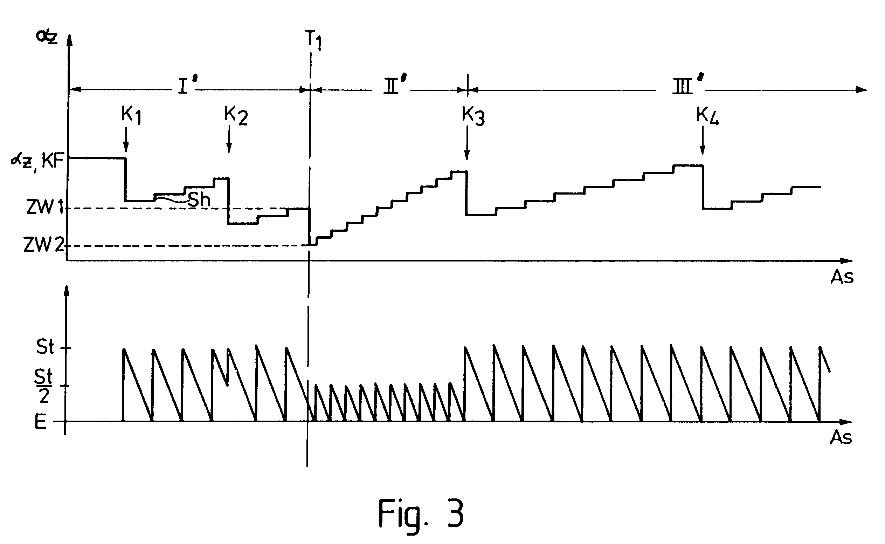

Das Prinzip der adaptiven Klopfregelung soll nunmehr anhand der Figur 3 näher dargelegt werden:

Für die Durchführung des Verfahrens zur adaptiven Klopfregelung sei angenommen, daß der Klopfsensor 6 eines Zylinders der Brennkraftmaschine einen Klopfzustand detektiert. Im oberen Diagramm der Figur 3, in dem der Zündwinkel α_{z} über der Größe "Arbeitsspiele" As aufgetragen ist, wird das Auftreten des Klopfens mit "K1" gekennzeichnet. Bis zum Eintritt des Klopfens wird der entsprechende Zylinder der Brennkraftmaschine mit dem Zündwinkel α_{z, KF} betrieben. Dies soll ein für den Betrieb mit hochoktanigem Krafstoff geltender leistungsoptimaler Kennfeldzündwinkel sein. Mit dem Auftreten einer klopfenden Verbrennung (K1) wird der Zündwinkel α_{z} in Richtung "spät" verstellt. Erreicht ein Stufenbreitenzähler des Prozessors 3, der seinen Startwert zum Beispiel synchronisiert mit dem Auftreten einer klopfenden Verbrennung einnimmt (der aber auch unsynchronisiert laufen kann), abwärts zählend seinen Endwert E, so wird der Zündwinkel in Richtung "früh" rückgeführt. Dies erfolgt derart stufenförmig, daß die Stufenhöhe Sh bei der Rückführung des Zündwinkels α_{z} kleiner als der Betrag der Einmalstufe bei der Spätverstellung des Zündwinkels α_{z} ist. Die Stufenhöhe Sh bei der Rückführung des Zündwinkels α_{z} entspricht daher nur einem Inkrementbetrag. Das Erreichen des Endwertes E des Stufenbreitenzählers führt dazu, daß der Stufenbreitenzähler wiederum seinen Startwert St annimmt und erneut auf seinen Endwert E herunterzählt. Mithin nähert sich der tatsächliche Zündwinkel α_{z} stufenförmig wieder seinem ursprünglichen Wert. Tritt dabei erneut ein Klopfen auf (K2), so wird wieder eine Spätverstellung des Zündwinkels α_{z} vorgenommen. Dieser Vorgang wiederholt sich entsprechend häufig, solange der Betriebspunkt der Brennkraftmaschine innerhalb des mit I' gekennzeichneten Zustands verbleibt.

Zum Zeitpunkt T1 erfolgt ein Bereichswechsel, das heißt, ein Bereich I bis XV des Adaptions-Kennfeld 8 wird verlassen und ein neuer Bereich I bis XV angenommen (z. B. kann ein Wechsel vom Bereich X in den Bereich XI erfolgen). Dies führt dazu, daß der während des Betriebs in diesem Bereich ermittelte Zündwinkelspätverstellungswert, zum Beispiel auch der beim Verlassen des Bereichs X gerade vorliegende, gültige Zündwinkel-Spätverstellungswert ZW1 im Bereich X des Adaptions-Kennfelds 8 gespeichert wird. Gleichzeitig wird der durch den vorherigen Betrieb im Bereich XI gespeicherte Zündwinkel-Spätverstellungswert ZW2 ausgegeben und für den Betrieb des entsprechenden Zylinders der Brennkraftmaschine angenommen.

Erfindungsgemäß erfolgt durch den Wechsel des Bereichs -ausgehend von dem gespeicherten ZündwinkelSpätverstellungswert ZW2 eine Rückführung des Zündwinkels α_{z} in Richtung "früh" mit vergrößerter Frühverstell-Geschwindigkeit. Dies wird dadurch realisiert, daß der Stufenbreitenzähler nicht bei einem Startwert St sondern bei einem kleineren Startwert (z. B. St/2) startet. Der verkleinerte Startwert kann z. B. durch einen programmierbaren Faktor (Devisor) vorgegeben werden. Mithin verkürzt sich die Stufenbreite der stufenförmigen Zündwinkelrückführung, so daß die erwähnte vergrößerte Frühverstell-Geschwindigkeit auftritt. Der Betrieb der Brennkraftmaschine erfolgt nunmehr in dem in der Figur 3 mit II' gekennzeichneten Zustand. Tritt ein erneutes Klopfen (K3) auf, so wird wiederum der Zündwinkel α_{z} in Richtung "spät" verstellt und anschließend nach dem üblichen Frühverstellalgorithmus, also nicht mit vergroßerter Frühverstell-Geschwindigkeit, rückgeführt (Zustand III'). Erfolgt dann wiederum ein Klopfen (K4), so wird der eben beschriebene Betrieb entsprechend (ohne vergrößerte Verstellgeschwindigkeit) weitergeführt.

Das erfindungsgemäße Verfahren hat den Vorteil, daß durch die große Dynamik im Falle eines Wechsels des Bereichs des Adaptions-Kennfelds 8 sehr schnell der für den jeweiligen Betriebszustand optimale Wert von der Brennkraftmaschine eingenommen wird. Dieses macht sich durch Leistungsgewinn, insbesondere im Stadtverkehr, stark bemerkbar.

Die Last-Drehzahlschwellen L₀, L₁, L₂, L₃; n₁, n₂, n₃, n₄ und n₅ sind vorzugsweise durch Programmierung einstellbar.

## Patentansprüche

1. Verfahren zur adaptiven Klopfregelung einer Brennkraftmaschine, wobei ein Zündwinkel entsprechend einem abgespeicherten Kennfeld ausgegeben wird, mit folgenden Schritten:
- Spätverstellung des Zündwinkels beim Klopfen eines Zylinders,
- Rückführung des Zündwinkels duch Verstellung in Richtung "früh" (Frühverstellung), wenn kein Klopfen auftritt,
- Speichern von aktuellen Zündwinkel-Spätverstellungswerten in einem Adaptions-Kennfeld, das in Abhängigkeit von der Größe von Betriebsparametern der Brennkraftmaschine unterteilte Bereiche aufweist, wobei stets ein Wert einer Zündwinkelspätverstellung, der während des Betriebs im zugehörigen Bereich ermittelt wurde, insbesondere beim Verlassen dieses Bereichs gespeichert wird,
- Einstellung des für einen bestimmten Bereich gespeicherten Wertes der Zündwinkelspätverstellung beim Wechsel in diesen Bereich,
dadurch gekennzeichnet, daß beim Wechsel des Bereichs (I-XV) die Rückführung des vorher für diesen Bereich gespeicherten Zündwinkels (α_{z}) solange mit vergrößerter Frühverstell-Geschwindigkeit erfolgt, bis es in diesem Bereich (I-XV) zum Klopfen kommt oder ein Vorgabewert des Zündwinkels (α_{z}) erreicht wird.

2. Verfahren nach Anspruch 1, **dadurch gekennzeichnet,** daß eine stufenförmige Zündwinkel-Spätbeziehungsweise Frühverstellung erfolgt.

3. Verfahren nach einem der vorhergehenden Ansprüche, **dadurch gekennzeichnet,** daß die Stufenbreite zur Erzielung der vergrößerten Frühverstell-Geschwindigkeit verkleinert wird.

4. Verfahren nach einem der vorhergehenden Ansprüche, **dadurch gekennzeichnet,** daß die verkleinerte Stufenbreite durch einen programmierbaren Faktor einstellbar ist.

5. Verfahren nach einem der vorhergehenden Ansprüche, **dadurch gekennzeichnet,** daß die Größe der Frühverstellstufe (Stufenhöhe) zur Erzielung der vergrößerten Frühverstell-Geschwindigkeit vergrößert wird.

6. Verfahren nach einem der vorhergehenden Ansprüche, **dadurch gekennzeichnet,** daß bei dem Anfahren eines neuen Bereichs in einer Steuergerät-Schaltung ein Steuerbit (Flag) gesetzt wird, das in seinem Setzzustand die vergrößerte Frühverstell-Geschwindigkeit auslöst.

7. Verfahren nach einem der vorhergehenden Ansprüche, **dadurch gekennzeichnet,** daß die Betriebsparameter die Last, insbesondere der Saugrohrdruck (Pₛ) oder die Luftmasse oder die Drosselklappen-Winkelstellung, und die Drehzahl (n) der Brennkraftmaschine sind.

8. Verfahren nach einem der vorhergehenden Ansprüche, **dadurch gekennzeichnet,** daß jedem Bereich des Adaptions-Kennfelds ein Last- und ein Drehzahlabschnitt zugeordnet sind.

9. Verfahren nach einem der vorhergehenden Ansprüche, **dadurch gekennzeichnet,** daß die Last- und Drehzahlabschnitte durch Last- und Drehzahlschwellen voneinander abgetrennt sind.

10. Verfahren nach einem der vorhergehenden Ansprüche, **dadurch gekennzeichnet,** daß in jedem Bereich nach dem ersten Auftreten eines Klopfzustands die Zündwinkel-Frühverstellung mit normaler, das heißt, nicht vergrößerter Frühverstell-Geschwindigkeit erfolgt.

11. Verfahren nach einem der vorhergehenden Ansprüche, **dadurch gekennzeichnet,** daß die Stufenbreite durch ein Zählintervall eines Stufenbreitenzählers definiert wird und daß für die Herbeiführung der vergrößerten Frühverstell-Geschwindigkeit der Startwert und/oder Endwert des Zählerstands derart verändert wird, daß sich das Zählintervall verkürzt.

12. Verfahren nach einem der vorhergehenden Ansprüche, **dadurch gekennzeichnet,** daß die Stufenhöhe bei der vorzugsweise einstufigen Zündwinkel-Spätverstellung größer als bei der Zündwinkel-Frühverstellung ist.

13. Verfahren nach einem der vorhergehenden Ansprüche, **dadurch gekennzeichnet**, daß stets beim Erreichen des Zählintervall-Endwerts eine Zündwinkel-Frühverstellung um einen der Stufenhöhe entsprechenden Inkrementbetrag erfolgt.

## Claims

1. Procedure for the adaptive anti-knock control of an internal combustion engine, in which an ignition angle is output in accordance with a stored characteristic diagram, comprising of the following steps:
- Retardation of the ignition angle when a cylinder knocks,
- Resetting of the ignition angle by adjustment in the direction of "advance" (advance adjustment), when no knocking occurs,
- Storage of prevailing ignition angle retardation values in an adaptation characteristic diagram which, depending on the size of operating parameters of the internal combustion engine, has subdivided ranges, with one value of an ignition angle retardation, determined during operation in the appropriate range, in particular on leaving this range, always being stored,
- Setting of the value of the ignition angle retardation, as stored for a particular range, on changing into this range,
**characterised by the fact that** on changing the range (I - XV), the resetting of the ignition angle (α_{z}) takes place with increased advance adjustment speed until knocking occurs in this range (I - XV), or until a predetermined value of the ignition angle (α_{z}) is reached.

2. Procedure in accordance with claim 1, **characterised by the fact that** a step-wise ignition angle retard or advance adjustment takes place.

3. Procedure in accordance with one of the preceding claims, **characterised by the fact that** the step width is reduced to achieve the increased advance adjustment speed.

4. Procedure in accordance with one of the preceding claims, **characterised by the fact that** the reduced step width can be set via a programmable factor.

5. Procedure in accordance with one of the preceding claims, **characterised by the fact that** the size of the advance adjustment step (step height) is enlarged in order to achieve the increased advance adjustment speed.

6. Procedure in accordance with one of the preceding claims, **characterised by the fact that** on entering a new range, a control bit (flag) is set in a control device circuit, this flag triggering, in its set state, the increased advance adjustment speed.

7. Procedure in accordance with one of the preceding claims, **characterised by the fact that** the operating parameters are the load, in particular the manifold pressure (pₛ) or the air mass or the throttle angle, and the speed (n) of the internal combustion engine.

8. Procedure in accordance with one of the preceding claims, **characterised by the fact that** a load section and a speed section are assigned to each range of the adaptation characteristic diagram.

9. Procedure in accordance with one of the preceding claims, **characterised by the fact that** the load and speed sections are separated from one another by load and speed thresholds.

10. Procedure in accordance with one of the preceding claims, **characterised by the fact that** in each range, after the first occurrence of knocking, the ignition angle advance adjustment takes place with normal, i.e. not increased, advance adjustment speed.

11. Procedure in accordance with one of the preceding claims, **characterised by the fact that** the step width is defined by a counting interval of a step width counter, and that to bring about the increased advance adjustment speed, the starting value and/or the final value of the counter count is altered in such a way that the counting interval is reduced.

12. Procedure in accordance with one of the preceding claims, **characterised by the fact that** the step height in the preferably single-step ignition angle retardation is larger than in ignition angle advance adjustment.

13. Procedure in accordance with one of the preceding claims, **characterised by the fact that** on reaching the counting interval final value, an ignition angle advance adjustment always takes place by an incremental amount corresponding to the step height.

## Revendications

1. Procédé de régulation adaptative du cliquetis d'un moteur à combustion interne, selon lequel l'angle d'allumage est fixé en fonction d'un champ de caractéristiques mises en mémoire, comprenant les étapes suivantes :
- réglage du retard de l'angle d'allumage lorsque du cliquetis se produit dans un cylindre,
- retour de l'angle d'allumage par réglage dans le sens de l'avance (réglage de l'avance) lorsqu'il n'y a pas de cliquetis,
- mise en mémoire des valeurs instantanées de réglage du retard de l'angle d'allumage dans un champ de caractéristiques d'adaptation qui comporte des zones subdivisées en fonction de la grandeur des paramètres de fonctionnement du moteur à combustion interne, et on enregistre toujours une valeur du réglage du retard de l'angle d'allumage qui a été obtenue pendant le fonctionnement dans la zone correspondante, en particulier lorsqu'on quitte cette zone,
- établissement de la valeur du réglage du retard de l'angle d'allumage enregistré pour une zone déterminée, lors du changement dans cette zone,
caractérisé en ce qu'en changeant de zone (I-XV) le retour vers l'angle d'allumage (α_{z}) enregistré pour cette zone se produit avec une vitesse augmentée de réglage de l'avance jusqu'à ce que du cliquetis ait lieu dans cette zone (I-XV) ou que l'on atteint une valeur déterminée de l'angle d'allumage (α_{z}).

2. Procédé selon la revendication 1, caractérisé en ce qu'on effectue un réglage du retard ou de l'avance de l'angle d'allumage en procédant par étapes.

3. Procédé selon l'une des revendications précédentes, caractérisé en ce qu'on réduit la largeur des étapes pour atteindre une vitesse plus grande de réglage de l'avance.

4. Procédé selon l'une des revendications précédentes, caractérisé en ce qu'on règle la largeur d'étape réduite par un coefficient programmable.

5. Procédé selon l'une des revendications précédentes, caractérisé en ce qu'on augmente la grandeur des étapes de réglage de l'avance (amplitude de l'étape) pour avoir une plus grande vitesse de réglage de l'avance.

6. Procédé selon l'une des revendications précédentes, caractérisé en ce que lorsqu'on passe dans une nouvelle zone, on met à l'état un bit de commande (drapeau) dans un appareil de commande, bit qui déclenche lorsqu'il est mis à l'état, la vitesse augmentée de réglage de l'avance.

7. Procédé selon l'une des revendications précédentes, caractérisé en ce que les paramètres de fonctionnement sont la charge notamment, la pression dans la tubulure d'aspiration (Pₛ) ou la masse d'air ou l'angle du volet d'étranglement et la vitesse de rotation (n) du moteur à combustion interne.

8. Procédé selon l'une des revendications précédentes, caractérisé en ce qu'à chaque zone du champ de caractéristiques d'adaptation est associé un segment de charge et un segment de vitesse de rotation.

9. Procédé selon l'une des revendications précédentes, caractérisé en ce que les segments de charge et de vitesse de rotation sont séparés les uns des autres par des seuils de charge et de vitesse de rotation.

10. Procédé selon l'une des revendications précédentes, caractérisé en ce que dans chaque zone, après la première occurrence d'un cliquetis, le réglage de l'avance de l'angle d'allumage se fait à la vitesse normale c'est-à-dire à une vitesse non augmentée de réglage de l'avance.

11. Procédé selon l'une des revendications précédentes, caractérisé en ce que la largeur d'étape est définie par un intervalle de comptage d'un compteur de largeur d'étape et en ce que pour établir la vitesse augmentée de réglage de l'avance, on modifie la valeur initiale et/ou la valeur finale de l'état de comptage pour raccourcir l'intervalle de comptage.

12. Procédé selon l'une des revendications précédentes, caractérisé en ce que la hauteur de l'étape pour un réglage du retard de l'angle d'allumage qui est de préférence une étape, est supérieure à celle du réglage de l'avance de l'angle d'allumage.

13. Procédé selon l'une des revendications précédentes, caractérisé en ce que chaque fois que l'on atteint la valeur finale de l'intervalle de comptage, il y a réglage de l'angle d'allumage dans le sens de l'avance d'un incrément correspondant à l'amplitude de l'étape.
